# FASCICULE DE BREVET EUROPEEN

(11) **EP 4 259 943 B1**
(45) Date de publication et mention de la délivrance du brevet: **04.06.2025**
(21) Numéro de dépôt: 20848843.7
(22) Date de dépôt: 09.12.2020
(51) Int. Cl.: F16B 7/02, B64B 1/08, E04B 1/58

(54) **DISPOSITIF DE FIXATION MECANIQUE A L'EXTREMITE D'UN TUBE**
VORRICHTUNG ZUR MECHANISCHEN BEFESTIGUNG AM ENDE EINES ROHRES
DEVICE FOR MECHANICAL ATTACHMENT TO THE END OF A TUBE

(43) Date de publication de la demande: 18.10.2023
(73) Titulaire: Epsilon Composite, 33340 Gaillan en Medoc (FR)
(72) Inventeur: PORTOLES, José, 33340 QUEYRAC (FR); FERRER, Denis, 33180 VERTHEUIL (FR); DOS SANTOS, Maxime, 33340 LESPARRE- MEDOC (FR)
(74) Mandataire: Novagraaf Technologies
(86) Numéro de dépôt international: PCT/FR2020/052362
(87) Numéro de publication internationale: WO 2022/123124

(56) Documents cités:
- BE-A3- 1 009 407
- CH-A- 251 206
- CN-A- 104 879 350
- DE-C- 660 546
- DE-U1- 29 505 791
- IT-A1- 201800 020 032

## Description

La présente invention concerne le domaine technique des dispositifs de fixation ancrés aux extrémités d'un tube et destinés à créer une liaison mécanique entre le tube et une structure et concerne en particulier un dispositif de fixation mécanique à l'extrémité d'un tube.

### Etat de la technique

Dans le but de fabriquer une structure légère et résistante, dans le domaine aéronautique, comme par exemple un dirigeable, des tubes sont utilisés et en particulier des tubes ou tiges cylindriques en matériau composite particulièrement résistants aux efforts mécaniques de traction, de compression ou de flexion. L'utilisation de tels tubes nécessite de prévoir des dispositifs à leur extrémité pour permettre de les fixer mécaniquement à une autre partie de la structure. Des dispositifs de fixation tels que des dispositifs d'ancrage ou de raccordement situés aux extrémités d'un tube comprennent des manchons filetés dans lesquels s'insèrent les extrémités également filetées du tube. Ces dispositifs sont en général difficiles à mettre en oeuvre et nécessitent une préparation de l'extrémité du tube dans laquelle ils viennent s'insérer.

D'autres dispositifs de fixation situés aux extrémités d'un tube sont composés de pièces assemblées par collage.

C'est le cas du dispositif décrit dans le document DE10200402144 dans lequel l'extrémité d'une tige cylindrique composite comprend un élément de filetage conique interne et un manchon conique situé entre la paroi de la tige et l'élément conique. La rigidité circonférentielle de la tige cylindrique est augmentée grâce à un enroulement annulaire en fibre. Le manchon conique est collé à la tige sur toute sa longueur. Ce dispositif permet de résister à des efforts importants sur la tige. Cependant, une fois mis en place et collé, ce dispositif difficilement démontable ne facilite pas la réparation, la réutilisation des pièces ou leur recyclage en fin de vie. D'autre part, les performances de résistance d'un assemblage collé nécessite une mise en oeuvre extrêmement stricte et suivie pour garantir sa reproductibilité. En outre, le contrôle mécanique d'un assemblage collé présente l'inconvénient d'être destructif ou bien d'introduire une incertitude sur la résistance future de l'assemblage. Le document IT201800020032A1 divulgue un dispositif connu.

### Exposé de l'invention

C'est pourquoi, le but de l'invention est de pallier aux inconvénients précités en fournissant un dispositif de fixation selon la revendication 1 à l'extrémité d'un tube permettant un montage et démontage simple des pièces composant le dispositif tout en garantissant un ancrage mécanique résistant et reproductible.

Un autre but de l'invention est de fournir un procédé d'assemblage selon la revendication 12 du dispositif de fixation selon la revendication 1.

L'objet de l'invention est donc un dispositif de fixation obtenu par l'assemblage de trois pièces à l'extrémité d'un tube, comprenant :
- un insert conique sous la forme d'un tronc de cône dont le diamètre se rétrécit en direction de l'extrémité du tube, l'insert conique présentant un élément de réception d'un organe de préhension ou de fixation,
- une bague interne pourvu d'un évidement en forme de tronc de cône dont le diamètre se rétrécit en direction du centre du tube et dont l'angle est égal ou légèrement inférieur à l'angle du tronc de cône de l'insert conique, la paroi externe de la bague interne étant principalement cylindrique de diamètre sensiblement égal au diamètre interne du tube, l'insert étant situé dans l'évidement de la bague interne. Selon les caractéristiques principales de l'invention, le dispositif de fixation comprend une bague externe comportant une partie cylindrique dont le diamètre interne est sensiblement égal au diamètre externe du tube, la paroi interne de la partie cylindrique de ladite bague externe étant destinée à venir en contact avec la paroi externe cylindrique du tube, la bague externe comprenant un épaulement qui ferme partiellement une extrémité de la bague externe et qui présente une ouverture circulaire, l'épaulement comprenant une face interne annulaire destinée à venir en butée contre la face d'extrémité du tube et contre la face transversale d'extrémité de la bague interne située du côté de l'extrémité du tube.

Un second objet de l'invention est un procédé d'assemblage de trois pièces à l'extrémité d'un tube pour obtenir le dispositif de fixation selon l'une des revendication 1 à 11, comprenant les étapes selon lesquelles :
- L'insert conique est emmanché dans l'évidement de la bague interne de façon à faire pénétrer sa face de plus petit diamètre par la face de la bague interne correspondant à sa face d'extrémité où l'évidement est de plus grand diamètre jusqu'à ce que l'insert conique soit immobilisé par contact,
- La bague interne munie de l'insert conique est placée dans le tube en étant poussé à l'intérieur jusqu'à ce que la face d'extrémité de la bague interne soit dans le même plan que la face d'extrémité du tube, la paroi externe de la bague interne étant cylindrique de diamètre sensiblement égal au diamètre interne du tube ou légèrement inférieur à celui-ci, la paroi cylindrique externe de la bague interne est alors située en contact contre la paroi interne du tube,
- La bague externe est placée autour du tube de façon à ce que la paroi interne de sa partie cylindrique soit en contact avec la paroi externe du tube et de façon à ce que la surface d'extrémité du tube soit en butée contre la face plane annulaire de la bague externe,
- Un effort est appliqué sur l'insert conique pour le déplacer dans la direction de l'extrémité du tube jusqu'à sa position assemblée, l'insert conique exerçant pendant son déplacement une poussée radiale sur la paroi de la bague interne entrainant son expansion, l'effort nécessaire appliqué correspondant à la précharge du dispositif de fixation restera en place après l'assemblage.

### Brève description des figures

Les buts, objets et caractéristiques de l'invention apparaîtront plus clairement à la lecture de la description qui suit faite en référence aux dessins dans lesquels :
[Fig. 1] représente une vue éclatée en trois dimensions d'une coupe du dispositif selon l'invention,
[Fig. 2] représente une coupe du dispositif selon l'invention selon le premier mode de réalisation de l'invention,
[Fig. 3] représente une vue en trois dimensions du dispositif selon l'invention en tant que pièce de liaison selon le premier mode,
[Fig. 4] représente une vue en coupe du dispositif selon l'invention en tant que pièce de liaison selon le premier mode,
[Fig. 5] représente une coupe du dispositif selon l'invention selon le second mode de réalisation de l'invention,
[Fig. 6] représente une vue en trois dimensions du dispositif selon l'invention en tant que pièce de liaison selon le second mode,
[Fig. 7] représente une vue en coupe du dispositif selon l'invention en tant que pièce de liaison selon le second mode.

### Description détaillée de l'invention.

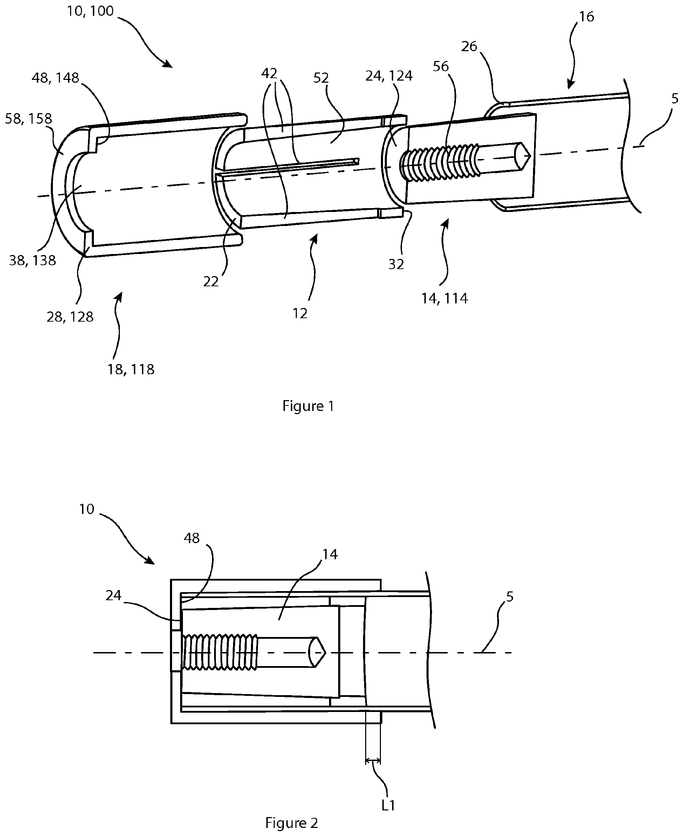

Le dispositif de fixation selon l'invention a deux modes de réalisation dans lequel il est respectivement indéformable et déformable. Ces deux modes sont illustrés spécifiquement sur les figures 2 à 7. La description s'applique aux deux modes de réalisation à moins qu'il en soit spécifié autrement. Dans la description la mention de deux références séparées par un « ou » signifie qu'il s'agit de la désignation du premier mode ou du second mode de réalisation.

Le dispositif de fixation 10 ou 100 selon l'invention est représenté en vue éclatée en perspective en coupe sur la figure 1. L'extrémité d'un tube 16 d'axe longitudinal 5 et sa face plane d'extrémité 26 sont également représentées en coupe. Le dispositif de fixation 10 ou 100 comprend principalement trois pièces destinées à être assemblées à l'extrémité du tube 16 : une bague interne 12, un insert conique 14 ou 114 et une bague externe 18 ou 118. Les trois pièces et le tube ont le même axe longitudinal représenté par l'axe 5 sur les figures. La bague interne 12 a une paroi cylindrique extérieure de diamètre égal ou sensiblement égal au diamètre interne du tube 16 ou légèrement inférieure et une paroi intérieure tronconique. La bague interne 12 comprend un évidement 52 en forme de tronc de cône traversant d'une extrémité à l'autre de la bague interne et une fente ou une pluralité de fentes 42. La bague interne est orientée par rapport au tube de façon à ce que le diamètre de son évidement 52 en forme de tronc de cône se rétrécisse en direction de l'extrémité du tube. Les fentes 42 sont pratiquées selon les génératrices de la bague interne 12 et leur plan passe par l'axe longitudinal 5 de la bague interne. Elles sont de préférence réparties de façon équidistante sur la circonférence de la bague interne. Comme on peut le voir sur la figure 1, les fentes 42 s'étendent longitudinalement sur une partie de la longueur de la bague interne 12. Le nombre de fentes 42 de la bague interne 12 est fonction de son diamètre. Selon le mode de réalisation préféré de l'invention et en particulier pour un diamètre extérieur de la bague interne 12 de l'ordre de 40 mm, le nombre de fentes 42 est de quatre. Le nombre de fentes peut être compris entre 1 et 12 sans sortir du cadre de l'invention.

La bague interne 12 comprend deux faces transversales d'extrémité orientées dans des plans transversaux par rapport à l'axe longitudinal 5. Une première face d'extrémité 22 orientée dans le même sens que la face d'extrémité 26 du tube 16 et une seconde face transversale d'extrémité 32. La seconde face transversale d'extrémité 32 de la bague interne 12 correspondant à sa face d'extrémité où l'évidement 52 est de plus grand diamètre.

Le dispositif de fixation 10 ou 100 comprend une bague externe 18 ou 118. La bague externe 18 ou 118 comprend principalement un corps cylindrique creux et un épaulement 28 ou 128 en forme de couronne annulaire qui ferme partiellement une extrémité de la bague et qui présente une ouverture circulaire 38 ou 138.. L'épaulement 28 ou 128 présente une face interne 48 ou 148 située à l'intérieur et à l'extrémité de la bague externe 18 ou 118 et une face externe 58 ou 158 située à l'extérieure et à l'extrémité de la bague externe, les faces 48 ou 148 et 58 ou 158 étant planes et de forme annulaire.

Le dispositif de fixation selon l'invention comprend également un insert conique 14 ou 114 en forme de tronc de cône dont le diamètre se rétrécit en direction de l'extrémité du tube 16. L'insert conique présente un élément de réception 56 d'un organe de préhension ou de fixation. Dans les modes de réalisation décrits, l'élément de réception est un trou central fileté. Cependant l'insert conique pourrait comporter un élément de réception sous la forme d'une partie male sans sortir du cadre de l'invention. L'évidement 52 en forme de tronc de cône a un angle égal ou inférieur d'au plus 1 degré à l'angle du tronc de cône de façon à ce que la pente de la paroi tronconique tournée vers l'extérieur de l'insert conique 14 ou 114 coïncide avec la pente de la paroi tronconique tournée vers l'intérieur de la bague interne 12. Cette caractéristique permet aux deux parois de rentrer en contact intime lorsque l'insert conique 14 ou 114 est emmanché dans la bague interne 12. L'insert conique 14 ou 114 a deux faces transversales d'extrémité orientées dans des plans transversaux par rapport à l'axe longitudinal 5. Ces deux faces transversales d'extrémités sont planes et circulaires. La première face transversale 24 ou 124 est celle correspondant au plus petit diamètre de l'insert conique, elle est placée du côté de l'extrémité du tube 16 tandis que la seconde face transversale de plus grand diamètre de l'insert conique est placée du côté de l'intérieur du tube 16.

Pour mettre en place le dispositif de fixation 10 ou 100 selon l'invention, il convient de procéder à l'assemblage des pièces selon les étapes suivantes :
- L'insert conique 14 ou 114 est emmanché dans l'évidement 52 de la bague interne 12 de façon à faire pénétrer sa première face 24 ou 124 de plus petit diamètre par la face 32 de la bague interne correspondant à sa face d'extrémité où l'évidement est de plus grand diamètre jusqu'à ce que l'insert conique soit immobilisé par contact avec la bague interne,
- La bague interne 12 munie de l'insert conique 14 ou 114 est placée dans le tube 16 en étant poussé à l'intérieur jusqu'à ce que la face d'extrémité 22 de la bague interne soit dans le même plan que la face d'extrémité 26 du tube 16. La paroi externe de la bague interne 12 étant cylindrique de diamètre sensiblement égal au diamètre interne du tube 16 ou légèrement inférieur à celui-ci, la paroi cylindrique externe de la bague interne 12 est alors située en contact contre la paroi interne du tube 16.
- La bague externe 18 ou 118 est placée autour du tube 16 de façon à ce que la paroi interne de sa partie cylindrique soit en contact avec la paroi externe du tube 16 et de façon à ce que la surface d'extrémité 26 du tube 16 soit en butée contre la face interne annulaire 48 ou 148 de la bague externe 18 ou 118.
- Un effort est appliqué sur l'insert conique pour le déplacer dans la direction de l'extrémité du tube jusqu'à sa position assemblée correspondant à sa position de fonctionnement ou de travail, l'insert conique exerçant pendant son déplacement une poussée radiale sur la paroi de la bague interne entrainant son expansion, l'effort nécessaire appliqué correspondant à la précharge du dispositif de fixation restera en place après l'assemblage. La précharge correspondant également à la charge de traction limite pour laquelle le dispositif 10 ou 100 a été dimensionné.

Lors de la dernière étape, l'élément de réception 56 de l'insert conique sert à le déplacer à l'aide d'un organe de préhension tel qu'un outil ou un boulon que l'on visse à l'intérieur du trou fileté par exemple et sur lequel on applique une traction alors qu'une force de direction opposée suffisante pour maintenir le dispositif de fixation 10 ou 100 fixe est appliquée sur l'épaulement 28 ou 128. Lors de la traction de l'insert conique 14 ou 114 jusqu'à sa position assemblée, la surface externe de l'insert conique glisse sur la paroi latérale intérieure de la bague interne 12 ce qui tend à la repousser vers l'extérieur et ce qui conduit à l'expansion de la bague interne grâce à l'élargissement des fentes 42 et ainsi, la précharge se met en place par déformation élastique de la bague interne.

La bague externe 18 ou 118 permet de confiner le tube afin que celui-ci supporte l'expansion de la bague interne sans fissurer. Une fois les pièces assemblées sur le tube, le dispositif de fixation selon l'invention pince le tube 16 entre la bague interne 12 expansible et la bague externe 18 ou 118. L'expansion de la bague interne 12 solidarise par friction les trois pièces 12, 14 ou 114, 18 ou 118 et le tube 16. L'insert conique applique une pression radiale et transversale sur la bague interne, cette pression est transmise également sur le tube, la paroi externe de la bague interne est fermement appliquée sur la paroi interne du tube et le dispositif de fixation est bloqué. Dès que l'insert conique est repoussé vers l'intérieur du tube 16, la pression est relâchée et les différentes pièces peuvent être démontées selon un procédé de désassemblage qui met en oeuvre les étapes du procédé d'assemblage en sens inverse.

Lorsque les différentes pièces du dispositif sont assemblées à l'extrémité du tube 16, le dispositif de fixation 10 ou 100 exerce une pression transversale sur les parois interne et externe du tube 16 de façon à ce que le dispositif soit maintenu serré sur le tube, l'insert conique 14 ou 114 est alors coincé dans la bague interne 12 dans sa position assemblée et le dispositif de fixation est prêt à recevoir et à résister à des efforts mécaniques externes. Dans cette position, l'expansion de la bague interne 12 est dû principalement à des déformations élastiques, ce qui présente l'avantage de faciliter le démontage du dispositif et sa réutilisation éventuelle.

L'insert conique 14 ou 114 a un angle inférieur à 7° degrés et de préférence est compris entre 1 ° et 5° degrés. Ces angles présentent l'avantage d'être nécessaires pour permettre le démontage des pièces et suffisant pour maintenir les pièces entre elles par friction Le dispositif selon l'invention ne comporte aucun élément collé et de ce fait facilite le procédé d'assemblage et limite les coûts.

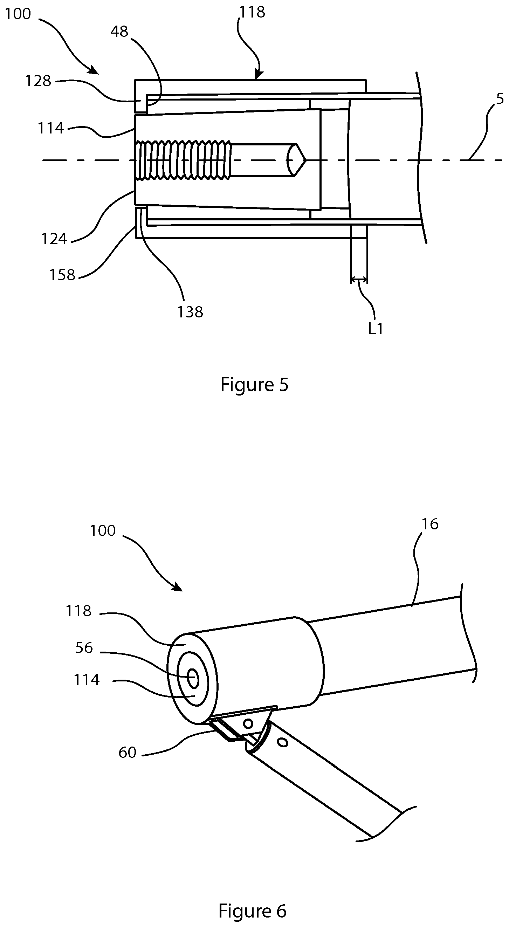

La longueur de la partie cylindrique de la bague externe 18 ou 118 est supérieure à la longueur de la bague interne 12 de façon à ce que la longueur de tube 16 recouverte par la bague externe 18 ou 118 soit supérieure à la longueur de tube 16 recouverte par la bague interne 12, les longueurs étant considérées selon l'axe longitudinale 5. Cette différence de longueur, notée L1 sur les figures 2 et 5 représente entre 5 % et 15 % de la longueur de tube 16 recouverte par la bague interne 12. Pour une différence de longueur L1 inférieure à 5%, un phénomène de concentration de contraintes dans la section de tube située à l'extrémité de la bague interne survient et peut conduire à la rupture du tube. Pour une différence de longueur L1 supérieure à 15%, la partie de bague externe au-delà des 15% ne supporte plus l'expansion de la bague interne.

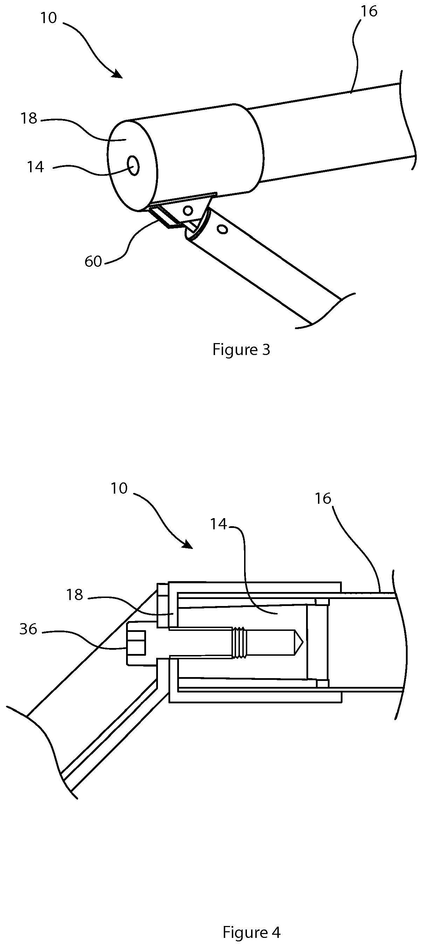

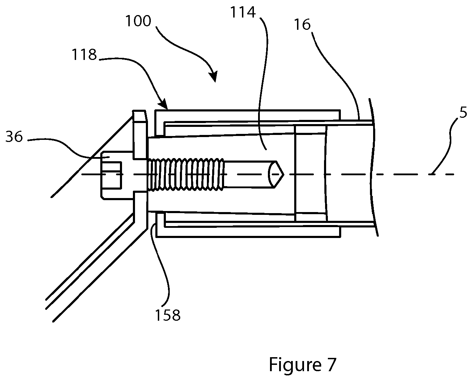

Le dispositif de fixation selon les deux modes de réalisation de l'invention et leurs alternatives peut servir de pièce de liaison pour venir fixer la dernière diagonale d'une structure treillis sur la bague extérieure 18 et 118 comme illustré sur la figures 3 et 6 ou sur l'insert conique 14 et 114 . Selon les figures 3 et 6, le dispositif de fixation 10 et 100 comprend une bride 60 fixée sur la paroi externe de la bague externe 18 ou 118 afin de relier le dispositif 10 ou 100 à la structure en poutre treillis. Selon les figures 4 et 7, une poutre de la structure en treillis est directement reliée au dispositif de fixation 10 et 100 par l'intermédiaire par exemple d'une vis 36 vissée sur l'élément de réception 56 de l'insert conique 14 et 114. La structure peut également être fixé sur une autre partie du dispositif.

Le dispositif de fixation 10 ou 100 peut être utilisé dans une construction aéronautique par exemple dans un dirigeable. Le tube 16 est alors un des tubes principaux de l'extrémité d'une poutre treillis et le dispositif 10 ou 100 assure ainsi la liaison entre l'extrémité du tube 16 et la structure du dirigeable et assure également le transfert des efforts appliqués sur les éléments constituant la structure qui peut être très sollicités mécaniquement.

En effet, selon les efforts subis par le dispositif dans sa position assemblée à l'extrémité du tube 16, ceux-ci sont transmis aux différentes pièces du dispositif de façon différente. En cas d'efforts en compression, l'introduction de l'effort se fait par la face externe 58 ou 158 de la bague externe 18 ou 118 qui transmet les efforts à travers les surfaces extérieure et intérieure du tube 16. En cas d'effort de traction, l'effort passe par l'insert conique 14 ou 114 qui le transmet par contact à la bague interne 12. Celle-ci étant en contact avec l'épaulement 28 ou 128 de la bague extérieure 18, les efforts passent également à travers les surfaces extérieure et intérieure du tube 16. Dans le cas du mode de réalisation indéformable, les efforts de torsion passent principalement par la surface en contact de la face externe 58 de la bague externe 18 puis par la surface en contact transversale 24 de l'insert conique avec la face interne 58 de la bague externe 18. Dans le cas du mode de réalisation déformable les efforts de torsion passent principalement par la surface en contact de la face transversale 24 de l'insert conique avec la face de la poutre de la structure en treillis. Si l'application nécessite de passer des efforts de torsion importants des éléments mécaniques standards tels que des clavettes ou des goupilles peuvent être utilisées pour relier en torsion l'insert conique 14 ou 114 et la bague externe 18.

Le dispositif de fixation 10 du premier mode de réalisation illustré sur les figures 2 à 4 est indéformable tandis que le dispositif de fixation 100 du second mode de réalisation, illustré sur les figures 5 à 7, est déformable. L'insert conique et la bague externe diffèrent selon ces deux modes sur certaines de leur dimension. Pour le dispositif de fixation indéformable 10, l'insert conique et la bague externe sont référencés 14 et 18 tandis que pour le dispositif de fixation déformable 100, l'insert conique et la bague externe sont référencés 114 et 118.

Selon le premier mode de réalisation illustré sur la figure 2, l'insert conique 14 et la bague externe sont dimensionnés pour que dans leur position assemblée avec la bague interne 12 sur l'extrémité du tube 16, la face transversale 24 d'extrémité de l'insert conique 14 soit en butée contre la face interne annulaire 48 de la bague externe 18. Le plus petit diamètre de l'insert conique 14 est un peu plus grand que le plus petit diamètre intérieur de la bague interne 12. La différence de diamètre est de quelques dixièmes de mm et plus précisément cette différence de diamètre est comprise entre 1 et 9 dixièmes de millimètre. La face d'extrémité 26 du tube 16 ainsi que la face transversale d'extrémité 22 de la bague interne sont également en butée contre la face interne annulaire 48 de la bague externe 18. La largeur de l'épaulement 28 est alors aménagée pour que l'ouverture circulaire 38 ait un diamètre suffisant pour laisser libre l'accès à l'élément de réception 56 de l'insert conique 14. Selon les modes de réalisation décrit, la largeur de l'épaulement 28 est donc aménagée pour que l'ouverture circulaire 38 ait un diamètre supérieur au diamètre du trou central fileté 56 de l'insert conique 14 et inférieur à la face transversale 24 de l'insert conique 14. Dans ce mode, la face transversale 24 de l'insert conique est dans le même plan que la face d'extrémité 22 de la bague interne 12. Dans ce mode de réalisation, lorsque le dispositif 10 subit une charge de traction supérieure à la charge pour laquelle il a été dimensionné, correspondant à la précharge, il reste indéformable jusqu'à la rupture éventuelle.

Selon le second mode de réalisation illustré sur la figure 5, l'insert conique 114 est dans sa position assemblée, sa face transversale 24 d'extrémité n'est pas en butée contre la face interne 148 de la bague externe 118. La face transversale 124 d'extrémité de l'insert conique est dans le même plan que la face externe 158 de la bague externe 118. Dans ce mode, et comme pour le premier mode, la face d'extrémité 26 du tube 16 ainsi que la face transversale d'extrémité 22 de la bague interne 12 sont également en butée contre la face plane annulaire 148 de la bague externe 118. La largeur de l'épaulement 128 est alors aménagée pour que l'ouverture circulaire 138 ait un diamètre supérieur au diamètre de la face transversale 124 de l'insert conique 114, de préférence supérieur de 0,1 à 2 mm. Dans ce mode de réalisation, l'insert conique peut se déplacer dans la direction longitudinale vers l'extérieur du tube s'il subit une charge supérieure à celle pour lequel il a été dimensionné, correspondant à la précharge. Le déplacement de l'insert conique au-delà de la bague externe, est un indicateur visuel de surcharge. Les opérateurs de maintenance peuvent ainsi surveiller la structure et détecter si elle a subi une charge supérieure à celle pour laquelle elle a été dimensionnée.

Si par exemple, l'insert subit un effort de traction supérieure à la précharge, il se déplace dans la direction longitudinale vers l'extérieur du tube comme on peut le voir illustré sur la figure 7 où la surface transversale 124 de l'insert conique a dépassé le plan 158 de la face externe de la bague 118. Dans ce mode de réalisation, les déformations du dispositif 100 et en particulier les déformations de la bague interne 12 sont des déformations plastiques et précéderont toujours la rupture éventuelle.

Les inserts coniques 14 et 114 sont dimensionnés de telle façon pour que lorsqu'ils sont dans leur position assemblée, les dispositifs 10 et 100 ont une précharge équivalente.De préférence, les trois pièces du dispositif sont faites dans le même matériau, par exemple en métal tel que de l'aluminium ou un alliage d'aluminium. Dans tous les cas, le coefficient de dilatation thermique transversale des trois pièces doit être sensiblement égal afin de limiter les dilations différentielles dues à la nature différente des matériaux qui pourraient intervenir et qui pourraient désassembler les pièces. En effet, des gradients de température peuvent survenir allant de-30°C à + 80°C, voir de -50°C à + 85°C. Afin de garantir la fonctionnalité du dispositif pour de telles plage de température, le dispositif selon l'invention a été testé jusqu'à 110°C.

Par exemple, les pièces peuvent être en matériau composite notamment en matériau composite à fibres de carbone.

De préférence, la longueur des fentes 42 sur la bague interne 12 est inférieure à la longueur de l'insert conique 14 ou 114. De plus, les fentes s'étendent de la face transversale 22 de la bague interne située du côté de l'extrémité du tube et correspondant à la première extrémité de la bague interne, jusqu'au voisinage de l'autre face transversale de la bague interne située à l'extrémité opposée de la première, côté tube. Donc une extrémité des fentes 42 débouche toutes du même côté à l'extérieure de la bague tandis que l'autre extrémité est à l'intérieure de la bague. Cette caractéristique présente plusieurs avantages. D'une part, la partie de la bague interne non fendue par les fentes 42 présente une surface annulaire interne continue en contact avec l'insert conique et une surface annulaire externe continue en contact avec le tube, la continuité des surfaces annulaires en contact assurant l'étanchéité du dispositif. D'autre part, la partie annulaire non fendue de la bague interne se dilate moins que la partie fendue lors de l'étape d'assemblage, et permet d'atténuer les sur-contraintes à la sortie du dispositif dans le tube.

Selon une alternative de réalisation du dispositif selon l'invention, la bague interne 12 comprend deux séries de fentes longitudinales, chaque série comprenant au moins deux fentes. Les fentes de la première série s'étendent de la face transversale 22 de la bague interne située du côté de l'extrémité du tube et correspondant à la première extrémité de la bague interne jusqu'au voisinage de l'autre face transversale 32 de la bague interne, située à l'extrémité opposée de la première, sans atteindre celle-ci, tandis que les fentes de la seconde série s'étendent en sens inverse, de l'autre face transversale 32 de la bague interne jusqu'au voisinage de la face transversale 22, mais sans l'atteindre. Les fentes longitudinales sont régulièrement espacées sur la surface de la bague interne et sont disposées de façon à alterner une fente de la seconde série entre deux fentes de la première série. Cette alternative de réalisation de fentes orientées « tête bêche » permet d'obtenir une expansion homogène de la bague interne. Cela permet donc d'obtenir des efforts répartis uniformément sur les parois du tube et donc de diminuer le risque de fissurer celles-ci.

Selon l'invention, le dispositif de l'invention est destiné à une utilisation aéronautique et en particulier à la réalisation de structures de dirigeable ou d'aéronef. Il est particulièrement bien adapté aux tubes utilisés pour ce type de réalisation faits en matériau composite principalement constitués de fibres unidirectionnelles, orientées selon la direction de l'axe longitudinal du tube. En effet, ces tubes ont la particularité de présenter une faible résistance transversale de l'ordre de 50 à 75 MPa.

Toutefois, le dispositif de fixation et son procédé d'assemblage pourrait être adaptés à d'autres réalisations nécessitant une fixation solide et fiable tout en garantissant un faible impact sur la masse de la structure sur laquelle il s'adapte.

## Revendications

1. Dispositif de fixation (10, 100) obtenu par l'assemblage de trois pièces (12, 14 ou 114, 18 ou 118), à l'extrémité d'un tube (16), comprenant :
- un insert conique (14, 114) sous la forme d'un tronc de cône dont le diamètre se rétrécit en direction de l'extrémité dudit tube, l'insert conique (14, 114) présentant un élément de réception (56) d'un organe de préhension ou de fixation ,
- une bague interne (12) pourvu d'un évidement (52) en forme de tronc de cône dont le diamètre se rétrécit en direction du centre du tube et dont l'angle est égal ou inférieur à l'angle du tronc de cône dudit insert conique, la paroi externe de ladite bague interne étant cylindrique de diamètre sensiblement égal au diamètre interne du tube (16), ledit insert étant situé dans ledit évidement de ladite bague interne,
une bague externe (18, 118) comportant une partie cylindrique dont le diamètre interne est sensiblement égal au diamètre externe dudit tube, la paroi interne de ladite partie cylindrique de ladite bague externe étant destinée à venir en contact avec la paroi externe cylindrique du tube (16), ladite bague externe comprenant un épaulement (28, 128) qui ferme partiellement une extrémité de ladite bague externe et qui présente une ouverture circulaire (38, 138), ledit épaulement comprenant une face interne annulaire (48, 148) destinée à venir en butée contre la face d'extrémité (26) du tube (16) et contre la face transversale d'extrémité (22) de la bague interne (12) située du côté de l'extrémité dudit tube, et une face externe située à l'extérieure et à **l'extrémité de la bague externe,**
**caractérisé en ce que** l'insert conique (14) et la bague externe (18) sont dimensionnés de façon a ce que dans leur position assemblée avec la bague interne (12) et le tube (16) :
soit une face transversale (24) d'extrémité de plus petit diamètre de l'insert coniqpe (14) soit en butée contre la face interne (48) de la bague externe (18,) l'ouverture circulaire (38) ayant un diamentre suffrisant pour laisser libre l'accès à l'élément de réception (56) et inférieur au diamètre de la face transversale (24),
soit la face transversale (124) d'extrémité de plus petit diamétre de l'insert conique (114) est dans le méme plan que la face externe (158) de la bague externe (118).

2. Dispositif de fixation selon la revendication 1, dans lequel les trois pièces (12, 14 ou 114, 18 ou 118) sont dimensionnées pour que leur assemblage à l'extrémité du tube (16) rende le dispositif (10 ou 100) solidaire du tube et capable de résister à une charge de traction correspondant à la charge nécessaire pour l'assemblage appelée précharge.

3. Dispositif de fixation selon la revendication 1 ou 2, dans lequel l'angle de l'évidement (52) est inférieur d'au plus 1 degré à l'angle du tronc de cône de l'insert conique (14, 114).

4. Dispositif selon la revendication 1 ,2 ou 3, dans lequel la bague interne (12) comprend une fente ou une pluralité de fentes (42) réparties de façon équidistante sur la circonférence de ladite bague interne et s'étendant longitudinalement sur une partie de la longueur de ladite bague interne.

5. Dispositif selon l'une des revendications 1 à 4, dans lequel l'insert conique (14, 114) a un angle inférieur à 7 degrés et de préférence compris entre 1 et 5 degrés.

6. Dispositif selon l'une des revendications 1 à 5, dans lequel la longueur de la partie cylindrique de la bague externe (18, 118) est supérieure à la longueur de la bague interne (12) de façon à ce que la longueur de tube (16) recouverte par la bague externe (18, 118) soit supérieure à la longueur de tube (16) recouverte par la bague interne (12), d'une longueur (L1) représentant entre 5 % et 15 % de la longueur de tube (16) recouverte par la bague interne (12).

7. Dispositif de fixation selon l'une des revendications 4 à 6, dans lequel les fentes (42) s'étendent d'une face transversale (22) de la bague interne (12) située du côté de l'extrémité du tube (16) et correspondant à la première extrémité de ladite bague interne, jusqu'au voisinage de l'autre face transversale (32) de ladite bague interne située à l'extrémité opposée de la première, de façon à que la partie de ladite bague interne (42) non fendue par lesdites fentes, présente une surface annulaire interne continue en contact avec l'insert conique (14, 114) et une surface annulaire externe continue en contact avec ledit tube (16), la continuité des surfaces annulaires en contact assurant l'étanchéité du dispositif de fixation (10, 100).

8. Dispositif de fixation selon l'une des revendications 4 à 6, dans lequel la bague interne (12) comprend deux séries de fentes longitudinales (42), chaque série comprenant au moins deux fentes (42), lesdites fentes de la première série s'étendent de la face transversale (22) de ladite bague interne située du côté de l'extrémité dudit tube et correspondant à la première extrémité de ladite bague interne jusqu'au voisinage de l'autre face transversale (32) de ladite bague interne, située à l'extrémité opposée de la première, tandis que lesdites fentes de la seconde série s'étendent en sens inverse, de l'autre face transversale (32) de ladite bague interne jusqu'au voisinage de la face transversale (22), lesdites fentes longitudinales étant disposées de façon à alterner une fente de la seconde série entre deux fentes de la première série.

9. Dispositif de fixation (10) indéformable selon la'une des revendications 1 à 9, dans lequel le plus petit diamètre de l'insert conique (14) est plus grand que le plus petit diamètre intérieur de la bague interne (12) de quelques dixièmes de mm et de préférence cette différence de diamètre est comprise entre 1 et 9 dixièmes de millimètre.

10. Dispositif de fixation (100) déformable selon l'une des revendications a 8, dans lequel l'ouverture circulaire (138) a un diamètre supérieur au diamètre de la face transversale (124) de plus petit diamètre de l'insert conique (114), de préférence cette différence de diamètre est comprise entre 0,1 mm et 2 mm, de façon à ce que l'insert conique (114) puisse se déplacer dans la direction longitudinale vers l'extérieur du tube si le dispositif (100) subit une charge de traction supérieure à celle pour lequel il a été dimensionné, correspondant à la précharge.

11. Dispositif de fixation (10, 100) selon l'une des revendications 1 à 10, dans lequel les coefficients de dilatation thermique transversale des trois pièces (12, 14 ou 114, 18 ou 118) sont sensiblement égaux.

12. Procédé d'assemblage de trois pièces (12, 14 ou 114, 18 ou 118) à l'extrémité d'un tube (16) pour obtenir le dispositif de fixation (10, 100) selon l'une des revendication 1 à 11, comprenant les étapes selon lesquelles :
- L'insert conique (14, 114) est emmanché dans l'évidement (52) de la bague interne (12) de façon à faire pénétrer sa face (24, 124) de plus petit diamètre par la face (32) de la bague interne correspondant à sa face d'extrémité où l'évidement est de plus grand diamètre jusqu'à ce que l'insert conique soit immobilisé par contact avec la bague interne,
- La bague interne (12) munie de l'insert conique (14, 114) est placée dans le tube (16) en étant poussé à l'intérieur jusqu'à ce que la face d'extrémité (22) de la bague interne soit dans le même plan que la face d'extrémité (26) du tube (16), la paroi externe de la bague interne (12) étant cylindrique de diamètre sensiblement égal au diamètre interne du tube (16) ou légèrement inférieur à celui-ci, la paroi cylindrique externe de la bague interne (12) est alors située en contact contre la paroi interne du tube (16),
La bague externe (18, 118) est placée autour du tube (16) de façon à ce que la paroi interne de sa partie cylindrique soit en contact avec la paroi externe du tube (16) et de façon à ce que la surface d'extrémité (26) du tube (16) soit en butée contre la face interne annulaire (48, 148) de la bague externe (18, 118),
Un effort est appliqué sur l'insert conique (14, 114) pour le déplacer dans la direction de l'extrémité du tube jusqu'à sa position assemblée, l'insert conique (14) et la bague externe (18) étant dimensionnés de facon à ce que dans leur position assemblée avec la bague interne (12) et le tube (16) :
∘ soit une face transversale (24) d'extrémité de plus petit diamétre de l'insert conique (14) soit en butée contre la face interne (48) de la bague externe (18), l'ouverture circulaire (38) ayant un diamétre suffisant pour laisser libre l'accés à l'élément de réception (56) et inférieur au diamétre de la face transversale (24),
∘ soit la face transversale *124) d'extrémité de plus petit diamétre de l'insert conique (114) est dans le même plan que la face externe (158) de la bague externe (118) :
- l'insert conique (14, 114) exerçant pendant son déplacement une poussée radiale sur la paroi de la bague interne entrainant son expansion, l'effort nécessaire appliqué correspondant à la précharge du dispositif de fixation (10, 100) restera en place après l'assemblage.

13. Structure treillis comprenant un dispositif de fixation (10, 100) selon l'une des revendications 1 à 11 pour la construction d'aéronef tel qu'un dirigeable, dans laquelle le tube (16) est un des tubes principaux de l'extrémité d'une poutre treillis.

14. Structure treillis selon la revendication 13, caracterisée eb ce que le dispositif de fixation (10, 100) comprend une bride (60) fixée sur la parot externe de la bague externe (18, 118) afin de relier le dispositif (10, 100) à la structure en poutre treillis.

## Patentansprüche

1. Befestigungsvorrichtung (10, 100), die durch Zusammenbau von drei Teilen (12, 14 oder 114, 18 oder 118) am Ende eines Rohrs (16) erhalten wird, umfassend:
- einen konischen Einsatz (14, 114) in Form eines Kegelstumpfes, dessen Durchmesser sich in Richtung des Endes des Rohrs verjüngt, wobei der konische Einsatz (14, 114) ein Aufnahmeelement (56) für ein Greif- oder Befestigungselement aufweist,
- einen Innenring (12), der mit einer kegelstumpfförmigen Aussparung (52) versehen ist, deren Durchmesser sich in Richtung der Mitte des Rohrs verjüngt und deren Winkel gleich oder kleiner als der Kegelstumpfwinkel des konischen Einsatzes ist, wobei die Außenwand des Innenrings zylindrisch ist und einen Durchmesser aufweist, der im Wesentlichen gleich dem Innendurchmesser des Rohrs (16) ist, wobei der Einsatz sich in der Aussparung des Innenrings befindet,
einen Außenring (18, 118) mit einem zylindrischen Teil, dessen Innendurchmesser im Wesentlichen gleich dem Außendurchmesser des Rohrs ist, wobei die Innenwand des zylindrischen Teils des Außenrings dazu bestimmt ist, mit der zylindrischen Außenwand des Rohrs (16) in Kontakt zu kommen, wobei der Außenring einen Absatz (28, 128) umfasst, der ein Ende des Außenrings teilweise verschließt und der eine kreisförmige Öffnung (38, 138) aufweist, wobei der Absatz eine ringförmige Innenfläche (48, 148) umfasst, die dazu bestimmt ist, an der Endfläche (26) des Rohrs (16) und an der Querendfläche (22) des auf der Seite des Endes des Rohrs befindlichen Innenrings (12) zur Anlage zu kommen, und eine Außenfläche, die sich an der Außenseite und am Ende des Außenrings befindet,
**dadurch gekennzeichnet, dass** der konische Einsatz (14) und der Außenring (18) so bemessen sind, dass in ihrer zusammengebauten Position mit dem Innenring (12) und dem Rohr (16):
entweder eine Querendfläche (24) mit kleinerem Durchmesser des konischen Einsatzes (14) an der Innenfläche (48) des Außenrings (18) anliegt, wobei die kreisförmige Öffnung (38) einen Durchmesser aufweist, der ausreicht, um den Zugang zum Aufnahmeelement (56) freizulassen, und kleiner als der Durchmesser der Querfläche (24) ist,
oder die Querendfläche (124) mit dem kleineren Durchmesser des konischen Einsatzes (114) in derselben Ebene wie die Außenfläche (158) des Außenrings (118) liegt.

2. Befestigungsvorrichtung nach Anspruch 1, wobei die drei Teile (12, 14 oder 114, 18 oder 118) so bemessen sind, dass ihr Zusammenbau am Ende des Rohrs (16) die Vorrichtung (10 oder 100) fest mit dem Rohr verbindet und in der Lage ist, einer Zugbelastung standzuhalten, die der für den Zusammenbau erforderlichen Belastung entspricht, die als Vorlast bezeichnet wird.

3. Befestigungsvorrichtung nach Anspruch 1 oder 2, wobei der Winkel der Aussparung (52) höchstens 1 Grad kleiner ist als der Kegelstumpfwinkel des konischen Einsatzes (14, 114).

4. Vorrichtung nach Anspruch 1, 2 oder 3, wobei der Innenring (12) einen Schlitz oder eine Vielzahl von Schlitzen (42) umfasst, die abstandsgleich über den Umfang des Innenrings verteilt sind und sich länglich auf einem Teil der Länge des Innenrings erstrecken.

5. Vorrichtung nach einem der Ansprüche 1 bis 4, wobei der konische Einsatz (14, 114) einen Winkel von weniger als 7 Grad und vorzugsweise zwischen 1 und 5 Grad aufweist.

6. Vorrichtung nach einem der Ansprüche 1 bis 5, wobei die Länge des zylindrischen Teils des Außenrings (18, 118) größer ist als die Länge des Innenrings (12), so dass die vom Außenring (18, 118) bedeckte Rohrlänge (16) größer ist als die vom Innenring (12) bedeckte Rohrlänge (16), mit einer Länge (L1), die zwischen 5 % und 15 % der vom Innenring (12) bedeckten Rohrlänge (16) darstellt.

7. Befestigungsvorrichtung nach einem der Ansprüche 4 bis 6, wobei sich die Schlitze (42) von einer Querfläche (22) des Innenrings (12), die sich auf der Seite des Endes des Rohrs (16) befindet und dem ersten Ende des Innenrings entspricht, bis in die Nähe der anderen Querfläche (32) des Innenrings, die sich am entgegengesetzten Ende des ersten befindet, so dass der Teil des Innenrings (42), der nicht durch die Schlitze geschlitzt ist, eine durchgehende innere ringförmige Oberfläche in Kontakt mit dem konischen Einsatz (14, 114) und eine durchgehende äußere ringförmige Oberfläche in Kontakt mit dem Rohr (16) aufweist, wobei die Durchgängigkeit der in Kontakt stehenden ringförmigen Oberflächen die Dichtheit der Befestigungsvorrichtung (10, 100) gewährleistet.

8. Befestigungsvorrichtung nach einem der Ansprüche 4 bis 6, wobei der Innenring (12) zwei Reihen länglicher Schlitze (42) umfasst, wobei jede Reihe mindestens zwei Schlitze (42) umfasst, wobei sich die Schlitze der ersten Reihe von der Querfläche (22) des Innenrings, die sich auf der Seite des Endes des Rohrs befindet und dem ersten Ende des Innenrings entspricht, bis in die Nähe der anderen Querfläche (32) des Innenrings erstrecken, die sich am entgegengesetzten Ende des ersten befindet, während sich die Schlitze der zweiten Reihe in umgekehrter Richtung von der anderen Querfläche (32) des Innenrings bis in die Nähe der Querfläche (22) erstrecken, wobei die länglichen Schlitze so angeordnet sind, dass sich ein Schlitz der zweiten Reihe zwischen zwei Schlitzen der ersten Reihe abwechselt.

9. Unverformbare Befestigungsvorrichtung (10) nach einem der Ansprüche 1 bis 8, wobei der kleinste Durchmesser des konischen Einsatzes (14) um einige Zehntel Millimeter größer ist als der kleinste Innendurchmesser des Innenringes (12)und vorzugsweise dieser Durchmesserunterschied zwischen 1 und 9 Zehntel Millimeter beträgt.

10. Verformbare Befestigungsvorrichtung (100) nach einem der Ansprüche 1 bis 8, wobei die kreisförmige Öffnung (138) einen Durchmesser aufweist, der größer ist als der Durchmesser der Querfläche (124) mit dem kleineren Durchmesser des konischen Einsatzes (114), vorzugsweise liegt dieser Durchmesserunterschied zwischen 0,1 mm und 2 mm, so dass sich der konische Einsatz (114) in der Längsrichtung zum Äußeren des Rohrs bewegen kann, wenn die Vorrichtung (100) einer Zugbelastung ausgesetzt wird, die höher ist als die, für die sie entsprechend der Vorlast bemessen wurde.

11. Befestigungsvorrichtung (10, 100) nach einem der Ansprüche 1 bis 10, wobei die Koeffizienten der thermischen Querausdehnung der drei Teile (12, 14 oder 114, 18 oder 118) im Wesentlichen gleich sind.

12. Verfahren zum Zusammenbauen von drei Teilen (12, 14 oder 114, 18 oder 118) am Ende eines Rohrs (16), um die Befestigungsvorrichtung (10, 100) nach einem der Ansprüche 1 bis 11 zu erhalten, umfassend die Schritte, wobei:
- der konische Einsatz (14, 114) in die Aussparung (52) des Innenrings (12) so eingepasst wird, dass seine Fläche (24, 124) mit kleinerem Durchmesser durch die Fläche (32) des Innenrings eindringt, die seiner Endfläche entspricht, wo die Aussparung den größeren Durchmesser aufweist, bis der konische Einsatz durch Kontakt mit dem Innenring fixiert ist,
- der mit dem konischen Einsatz (14, 114) versehene Innenring (12) in das Rohr (16) gesetzt wird, indem er nach innen gedrückt wird, bis die Endfläche (22) des Innenrings in derselben Ebene wie die Endfläche (26) des Rohrs (16) liegt, wobei die Außenwand des Innenrings (12) zylindrisch ist und einen Durchmesser aufweist, der im Wesentlichen gleich dem Innendurchmesser des Rohrs (16) oder geringfügig kleiner als dieser ist, wobei die zylindrische Außenwand des Innenrings (12) sich dann in Kontakt gegen die Innenwand des Rohrs (16) befindet,
- der Außenring (18, 118) so um das Rohr (16) platziert wird, dass die Innenwand seines zylindrischen Teils in Kontakt mit der Außenwand des Rohrs (16) ist und dass die Endoberfläche (26) des Rohrs (16) an der ringförmigen Innenfläche (48, 148) des Außenrings (18, 118) anliegt,
- eine Kraft auf den konischen Einsatz (14, 114) ausgeübt wird, um ihn in Richtung des Endes des Rohrs in seine zusammengesetzte Position zu bewegen, wobei der konische Einsatz (14) und der Außenring (18) so bemessen sind, dass sie in ihrer zusammengebauten Position mit dem Innenring (12) und dem Rohr (16):
∘ entweder eine Querendfläche (24) mit kleinerem Durchmesser des konischen Einsatzes (14) oder an der Innenfläche (48) des Außenrings (18) anliegt, wobei die kreisförmige Öffnung (38) einen Durchmesser aufweist, der ausreicht, um den Zugang zum Aufnahmeelement (56) freizulassen, und kleiner als der Durchmesser der Querfläche (24) ist.
∘ oder die Querendfläche (124) mit dem kleineren Durchmesser des konischen Einsatzes (114) in derselben Ebene wie die Außenfläche (158) des Außenrings (118) liegt:
- wobei der konische Einsatz (14, 114) während seiner Bewegung einen Radialschub auf die Wand des Innenrings ausübt, der dessen Ausdehnung bewirkt, wobei die aufgebrachte erforderliche Kraft der Vorlast der Befestigungsvorrichtung (10, 100) entspricht und nach dem Zusammenbau an Ort und Stelle bleibt.

13. Gitterstruktur, umfassend eine Befestigungsvorrichtung (10, 100) nach einem der Ansprüche 1 bis 11 für den Bau eines Luftfahrzeugs wie eines Luftschiffs, wobei das Rohr (16) eines der Hauptrohre des Endes eines Fachwerkträgers ist.

14. Gitterstruktur nach Anspruch 13, **dadurch gekennzeichnet, dass** die Befestigungsvorrichtung (10, 100) eine an der Außenwand des Außenrings (18, 118) befestigte Klammer (60) umfasst, um die Vorrichtung (10, 100) mit der Fachwerkträgerstruktur zu verbinden.

## Claims

1. An attachment device (10, 100) obtained by joining three components (12, 14 or 114, 18 or 118), at the end of a tube (16), comprising:
- a conical insert (14, 114) in the form of a truncated cone, the diameter of which narrows in the direction of the end of said tube, the conical insert (14, 114) having an element for receiving (56) a gripping or attachment member,
- an internal ring (12) provided with a recess (52) in the form of a truncated cone, the diameter of which narrows in the direction of the center of the tube and the angle of which is equal to or less than the angle of the truncated cone of the conical insert, the external wall of said internal ring being cylindrical with a diameter substantially equal to the internal diameter of the tube (16), said insert being located in the recess of said internal ring,
- an extemal ring (18, 118) comprising a cylindrical portion, the intemal diameter of which is substantially equal to the extemal diameter of said tube, the intemal wall of said cylindrical portion of said extemal ring being intended to come into contact with the cylindrical extemal wall of the tube (16), said extemal ring comprising a shoulder (28, 128) which partially closes an end of said extemal ring and which has a circular opening (38, 138), said shoulder comprising an annular intemal face (48, 148) intended to abut the end face (26) of the tube (16) and against the transverse end face (22) of the intemal ring (12) located on the side of the end of said tube and an extemal face at the outside and at the end of the extemal ring,
**characterized in that** the conical insert (14) and the extemal ring (18) are sized so that in their assembled position with the intemal ring (12) and the tube (16):
either a smallest-diameter transverse end face (24) of the conical insert (14) abuts the intemal face (48) of the external ring (18), the circular opening (38) having a sufficient diameter to allow free access to the receiving element (56) and less than the diameter of the transverse face (24),
or the smallest-diameter transverse end face (124) of the conical insert (114) is in the same plane as the external face (158) of the external ring (118).

2. The attachment device according to claim 1, wherein the three components (12, 14 or 114, 18 or 118) are sized so that their assembly at the end of the tube (16) renders the device (10 or 100) integral to the tube and capable of withstanding a tensile load corresponding to the load required for the assembly referred to as a preload.

3. The attachment device according to claim 1 or 2, wherein the angle of the recess (52) is up to 1 degree less than the angle of the truncated cone of the conical insert (14, 114).

4. The device according to claim 1, 2 or 3, wherein the internal ring (12) comprises a slot or a plurality of slots (42) equidistantly distributed around the circumference of said internal ring and extending longitudinally over a portion of the length of said intemal ring.

5. The device according to one of claims 1 to 4, wherein the conical insert (14, 114) has an angle of less than seven degrees and preferably between one and five degrees.

6. The device according to one of claims 1 to 5, wherein the length of the cylindrical portion of the external ring (18, 118) is greater than the length of the intemal ring (12) so that the length of tube (16) covered by the extemal ring (18, 118) is greater than the length of tube (16) covered by the internal ring (12), by a length (L1) representing between 5% and 15% of the length of tube (16) covered by the internal ring (12).

7. The attachment device according to one of claims 4 to 6, wherein the slots (42) extend from a transverse face (22) of the intemal ring (12) located on the side of the end of the tube (16) and corresponding to the first end of said intemal ring, to the vicinity of the other transverse face (32) of said intemal ring located at the opposite end of the first, so that the portion of said intemal ring (42) not split by said slots, has a continuous intemal annular surface in contact with the conical insert (14, 114) and a continuous extemal annular surface in contact with said tube (16), the continuity of the annular surfaces in contact ensuring the sealing of the attachment device (10, 100).

8. The attachment device according to one of claims 4 to 6, wherein the internal ring (12) comprises two series of longitudinal slots (42), each series comprising at least two slots (42), said slots of the first series extend from the transverse face (22) of said internal ring located on the side of the end of said tube and corresponding to the first end of said internal ring to the vicinity of the other transverse face (32) of said internal ring, located at the opposite end of the first, while said slots of the second series extend in the opposite direction, from the other transverse face (32) of said internal ring to the vicinity of the transverse face (22), said longitudinal slots being arranged so as to alternate a slot of the second series between two slots of the first series.

9. The non-deformable attachment device (10) according to one of claims 1 to 8, wherein the smallest diameter of the conical insert (14) is greater than the smallest intemal diameter of the intemal ring (12) by a few tenths of a mm and preferably this difference in diameter is between one- and nine-tenths of a millimeter.

10. The deformable attachment device (100) according to one of claims 1 to 8, wherein the circular opening (138) has a diameter greater than the diameter of the smaller diameter transverse face (124) of the conical insert (114), preferably this diameter difference is between 0.1 mm and 2 mm, so that the conical insert (114) can move in the longitudinal direction toward the exterior of the tube if the device (100) experiences a higher tensile load than that for which it has been sized, corresponding to the preload.

11. The attachment device (10, 100) according to one of the claims 1 to 10, wherein the transverse thermal expansion coefficients of the three components (12, 14 or 114, 18 or 118) are substantially equal.

12. A method for joining three components (12, 14 or 114, 18 or 118) to the end of a tube (16) to obtain the attachment device (10, 100) according to one of claims 1 to 11, comprising the steps of:
- The conical insert (14, 114) is fitted into the recess (52) of the intemal ring (12) so as to cause its smaller-diameter face (24, 124) to penetrate through the face (32) of the intemal ring corresponding to its end face where the recess is of greater diameter until the conical insert is immobilized by contact with the intemal ring,
- **The intemal** ring (12) provided with the conical insert (14, 114) is placed in the tube (16) by being pushed inside until the end face (22) of the intemal ring is in the same plane as the end face (26) of the tube (16), the extemal wall of the internal ring (12) being cylindrical with a diameter substantially equal to the intemal diameter of the tube (16) or slightly smaller, the extemal cylindrical wall of the intemal ring (12) is then positioned in contact against the intemal wall of the tube (16),
- The external ring (18, 118) is placed around the tube (16) so that the intemal wall of its cylindrical portion is in contact with the external wall of the tube (16) and so that the end surface (26) of the tube (16) abuts the annular planar face (48, 148) of the external ring (18, 118),
- A force is applied to the conical insert (14, 114) in order to move it in the direction of the end of the tube to its assembled position, the conical insert (14) and the extemal ring (18) being sized so that in their assembled position with the intemal ring (12) and the tube (16):
∘ either a smallest-diameter transverse end face (24) of the conical insert (14) abuts the intemal face (48) of the external ring (18), the circular opening (38) having a sufficient diameter to allow free access to the receiving element (56) and less than the diameter of the transverse face (24),
∘ or the smallest-diameter transverse end face (124) of the conical insert (114) is in the same plane as the external face (158) of the external ring (118);
the conical insert (14, 114) exerting, during its movement, a radial thrust on the wall of the intemal ring causing its expansion, the necessary force applied corresponding to the preload of the attachment device (10, 100) will remain in place after assembly.

13. A lattice structure comprising an attachment device (10, 100) according to one of claims 1 to 11 for the construction of aircraft such as a dirigible, wherein the tube (16) is one of the main tubes of the end of a lattice beam.

14. The lattice structure according to claim 13, **characterized in that** the attachment device (10, 100) comprises a flange (60) attached to the extemal wall of the extemal ring (18, 118) in order to connect the device (10, 100) to the structure made of lattice beams.
